(19) Europäisches Patentamt
European Patent Office
Office européen des brevets

(11) Numéro de publication: **0 172 121**
**B1**

# (12) FASCICULE DE BREVET EUROPEEN

(45) Date de publication du fascicule du brevet: **09.12.87**

(51) Int. Cl.⁴: **C 04 B 35/26**, H 01 F 1/10

(21) Numéro de dépôt: **85420139.9**

(22) Date de dépôt: **23.07.85**

(54) **Matériau magnétique anisotrope à base d'oxydes pour aimants permanents.**

(30) Priorité: **25.07.84 FR 8412035**

(43) Date de publication de la demande:
**19.02.86 Bulletin 86/8**

(45) Mention de la délivrance du brevet:
**09.12.87 Bulletin 87/50**

(84) Etats contractants désignés:
**BE CH DE FR GB IT LI NL SE**

(56) Documents cités:
**FR - A - 1 169 564**

(73) Titulaire: **AIMANTS UGIMAG SA, Avenue d'Uriage, F-38830 Saint-Pierre d'Allevard (FR)**
Titulaire: **CENTRE NATIONAL DE LA RECHERCHE SCIENTIFIQUE (CNRS), 15, Quai Anatole France, F-75007 Paris (FR)**

(72) Inventeur: **Joubert, Jean-Claude, Venon, F-38610 Gieres (FR)**
Inventeur: **Lemaire, Henri, Chemin Saint Jean, F-38700 La Tronche (FR)**
Inventeur: **Mignot, Jean-Pierre, 4, rue Claude Debussy, F-38100 Grenoble (FR)**
Inventeur: **Pingault, Denis, Chemin des Civets, F-38830 Saint Ismier (FR)**

(74) Mandataire: **Séraphin, Léon et al, PECHINEY 28, rue de Bonnel, F-69433 Lyon Cedex 3 (FR)**

**EP 0 172 121 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne un matériau anisotrope à base d'oxydes, de structure hexagonale, utilisable en particulier pour la fabrication d'aimants permanents ainsi que son procédé de fabrication et les aimants obtenus en contenant.

On sait que des matériaux hexagonaux à base de la famille des ferrites W de formule générale:

$$MA_2^{II}\ Fe_{16}^{III}\ O_{27}$$

dans laquelle M représente un métal du groupe Ba, Sr et/ou Pb, $A^{II}$ un ou plusieurs métaux bivalents du groupe Fe, Zn, Cu, Ni, Mn, Mg, Co, le $Fe^{III}$ étant à l'état trivalent — voir par exemple FR-A-2 483 120, page 2 — possèdent dans certains cas de métal bivalent A certaines propriétés magnétiques supérieures de 10% environ aux ferrites M type $BaFe_{12}O_{19}$ telles que, par exemple, l'aimantation, la température de Curie ou le champ d'anisotropie.

Parmi les exemples les plus connus, on peut citer les suivants:

— le ferrite $Zn_2$-W de formule: $BaZn_2Fe_{16}O_{27}$
— le ferrite $Fe_2$-W de formule globale: $BaFe_{16}O_{27}$ dont la formule structurale $BaFe_2^{II}\ Fe_{16}^{III}\ O_{27}$ fait mieux apparaître la différence de valence des ions Fe.

Le ferrite du premier exemple, $Zn_2$-W possède la plus forte aimantation connue à la température ambiante (79 $Am^2/kg$) parmi les ferrites hexagonaux, mais par contre, il présente un point de Curie assez bas (375°C contre 450°C pour les ferrites M) et il a l'inconvénient d'une préparation longue et délicate, nécessitant plusieurs broyages et cuissons, en particulier pour s'affranchir de la présence néfaste du ferrite de Zn — le spinelle $ZnF2_2O_4$ — ce qui impose en particulier des températures de ferritisation élevées pendant de longues durées.

Aussi, ce ferrite n'a-t-il jamais été utilisé en pratique pour la fabrication d'aimants permanents, auxquels on demande la propriété d'une force coercitive $\geqslant$ 80 kA/m.

Bien que le ferrite du second exemple, $Fe_2$-W, pour lequel le fer est à deux états de valence (bi ou trivalent), possède la plus forte anisotropie magnétocristalline (Ha $\simeq$ 1520 kA/m), il exige un contrôle délicat du potentiel oxygène de l'atmosphère de ferritisation et de frittage pour obtenir les quantités convenables de $Fe^{II}$ et $Fe^{III}$, selon l'équilibre:

$$2Fe_3O_4 + 0,5\ O_2 \rightleftarrows eFe_2O_3$$

fonction de la température (voir FR-A-2 399 106). De ce fait, la fabrication de ce ferrite se heurte à des difficultés technologiques considérables pour une application industrielle, car s'écartant notablement des conditions pratiques habituelles pour l'obtention des ferrites M.

Les ferrites hexagonaux selon l'invention permettent d'éliminer les inconvénients signalés ci-dessus et possèdent la formule dualistique générale suivante:

$$(1+a)\ MO \cdot 2(1\text{-}x)Me^{II}O \cdot 0,5\ x\ Me_2^{I}O \cdot (8+0,5x)Me_2^{III}O_3$$

dans laquelle:
— M représente un ou plusieurs métaux du groupe Sr, Ba, ces derniers étant éventuellement partiellement substitués par le Ca ou Pb,
— $Me^{II}$ représente un ou plusieurs métaux bivalents du groupe Zn, Mn, Ni, Co, Mg avec $0 < x \leqslant 1$, la fraction atomique de Zn restant cependant inférieure à 0,7,
— $Me^{I}$ représente le $Cu^{I}$ monovalent ou les métaux monovalents $Cu^{I}$ et Li,
— $Me^{III}$ représente un ou plusieurs métaux trivalents du groupe $Fe^{III}$, Al, Cr, ces derniers pouvant être partiellement substitués par le $Co^{III}$, $Mn^{III}$ ou $Ru^{III}$,
— et a étant compris entre −0,05 et +0,15.

Par fraction atomique de Zn < 0,7, on entend que:
— si Zn est le seul métal bivalent présente: (1-x) < 0,7 soit $x \geqslant 0,3$,
— si Zn est l'un des métaux bivalents présents, soit par exemple Zn, Mn, Ni, dans la formule générale, le deuxième composant s'écrivant: ..... $2(1\text{-}x)\ (Zn_uMn_vNi_w)\ O$ . ....

avec u + v + w = 1, on doit alors avoir: (1-x)u < 0,7.

En présence d'une quantité notable de Zn (fraction atomique $\geqslant$ 0,7), l'expérience montre qu'il est très difficile d'obtenir des ferrites hexagonaux exempts de la phase spinelle, essentiellement $ZnFe_2O_4$. La valeur de a est fonction des conditions de fabrication des aimants et apports ou pertes au cours de l'élaboration (par exemple: apport d'oxydes par les corps broyants, ajouts intentionnels ou pertes en milieux aqueux), et elle est maintenue de préférence entre −0,02 et +0,05 pour assurer une bonne stabilité des produits préparés.

Cependant, pour obtenir en présence de Zn les propriétés magnétiques optimales, des essais ont montré que la fraction atomique en Zn doit être de préférence comprise entre 0,1 et 0,6.

Les ferrites selon l'invention se distinguent de l'art antérieur en ce qu'ils comportent au moins du cuivre à l'état monovalent.

Les ferrites selon l'invention présentent simultanément les avantages suivants:
— préparation aisée dans des conditions voisines de celles de l'obtention des ferrites M, en atmosphère classique oxydante, en particulier à l'air,
— aimantation spécifique et température de Curie élevées, champ d'anisotropie élevé,
— transformation aisée par la métallurgie des poudres en aimant permanent aux bonnes propriétés magnétiques en particulier à une température de frittage inférieure à 100°C environ à celle du ferrite M.

Nous rappelons que le ferrite M industriel, de structure magnétoplombite, possède la formule générale $(Ba,Sr)O \cdot n\ Fe_2O_3$ avec $5 \leqslant n \leqslant 6$.

Le procédé de fabrication de ces ferrites comporte de façon classique le mélange des oxydes constitutifs (ou de composés conduisant à ces oxydes par pyrolyse) sous forme pulvérulente ou de suspension aqueuse, puis calcination à l'air et broyage. Les poudres ainsi obtenues peuvent être utilisées pour la

fabrication d'aimants permanents frittés ou liés par les techniques classiques ou sous forme de poudres magnétiques pour enregistrements magnétiques, brosses magnétiques pour photocopieurs, etc....

La calcination se fait entre 1200 et 1370°C pendant des durées relativement courtes allant de 15 minutes à 20 heures (de préférence 40 minutes à 3 heures à une température de l'ordre de 1320°C), suivi d'un refroidissement rapide (trempe à l'air), dont la cinétique effective dépend de la composition du ferrite formé; par exemple, pour $BaO \cdot 0,5\ Cu_2O \cdot 8,5\ Fe_2O_3$ elle doit être d'environ 100°C/mn pendant les 5 premières minutes et pourrait être plus lente ensuite.

Il a également été remarqué que pour obtenir certains produits contenant du Zn et ayant une bonne aimantation, la vitesse de montée en température de calcination doit être assez rapide, de préférence supérieure à 15°C/mn, notamment lorsque $x \leqslant 0,5$.

Lors du mélange initial des oxydes constitutifs, mais de préférence lors des opérations ultérieures de broyage des produits formés par calcination, il est avantageux d'ajouter des adjuvants à base de silice, de silicates, d'oxydes alcalinoterreux, $Al_2O_3$, $TiO_2$ et/ou $Bi_2O_3$ ou des composés libérant ces oxydes par chauffage (par exemple le silicate d'éthyle) en quantité totale inférieure ou égale à 5% en poids du ferrite formé, facilitant la densification lors du frittage et contrôlant la croissance du grain lors du frittage ou de la calcination.

Ces ferrites peuvent être utilisés seuls ou en combinaison avec des ferrites M pour la fabrication d'aimants permanents frittés ou liés.

L'invention sera mieux comprise à l'aide des exemples suivants illustrés par les figures 1 à 11.

La figure 1 représente la variation de la température de Curie de ferrite $BaO \cdot 2(1\text{-}x)ZnO \cdot 0,5\ x\ Cu_2O \cdot 0,5\ x\ X_2O_3 \cdot 8\ Fe_2O_3$, avec $0 \leqslant x \leqslant 1$ et X = Fe, Al, Cr.

La figure 2 représente les variations de l'aimantation (σ) à température ambiante déterminée sous un champ de 2000 kA/m, du champ d'anisotropie (Ha) et de la première constante d'anisotropie ($K_1$) déterminée par les lois d'approche à la saturation du même ferrite avec X = Fe en fonction de x.

La figure 3 représente l'évolution de la température de Curie pour les ferrites $BaO \cdot 2(1\text{-}x)ZnO \cdot 0,5\ x\ Li_2O \cdot (8+0,5x)F2_2O_3$ et $BaO \cdot 2(1\text{-}x)ZnO \cdot 0,5\ x\ Cu_2O \cdot (8+0,5x)Fe_2O_3$.

La figure 4 représente la variation de l'aimantation (σ) sous 2000 kA/m à 20°C, de la constante d'anisotropie (Ha) et de la première constante d'anisotropie ($K_1$) du ferrite $BaO \cdot 2(1\text{-}x)ZnO \cdot 0,5\ x\ Li_2O \cdot (8+0,5x)Fe_2O_3$ en fonction de x.

La figure 5 représente la variation de la température de Curie du ferrite $BaO \cdot 0,5(1\text{-}y)Cu_2O \cdot 0,5\ y\ Li_2O \cdot 8,5\ Fe_2O_3$ en fonction de y.

La figure 6 représente la variation de l'aimantation sous 2000 kA/m à 20°C (σ), du coefficient du champ d'anisotropie (Ha) et de la première constante d'anisotropie ($K_1$) du ferrite ci-dessus en fonction de y.

La figure 7 représente la variation du champ d'anisotropie (Ha), de la première constante d'anisotropie ($K_1$) du ferrite $(1\text{-}z)BaO \cdot z\ SrO \cdot 0,5\ Cu_2O \cdot 8,5\ Fe_2O_3$ en fonction de z.

La figure 8 représente le second quadrant des courbes d'hystérésis de l'aimantation et de l'induction d'un aimant préparé selon l'invention pour le ferrite $SrO \cdot ZnO \cdot 0,25\ CuO_2 \cdot 8,25\ Fe_2O_3$.

La figure 9 représente l'évolution de l'aimantation sous 2000 kA/m après traitement pendant 1 heure à l'air aux températures indiquées.

Les figures 10 et 11 représentent le diagramme de rayons X des ferrites $BaO \cdot 2(1\text{-}x)ZnO \cdot 0,5\ x\ Cu_2O \cdot (8+0,5x)Fe_2O_3$ pour x = 0,25 et x = 0,5 respectivement.

Les ferrites qui ne contiennent pas de $Cu_2O$ sont mentionnés à titre d'exemples comparatifs.

*Exemple 1*

On a préparé les ferrites de formule: $BaO \cdot 0,5\ Cu_2O \cdot 0,5\ X_2O_3 \cdot 8\ Fe_2O_3$ à partir des oxydes $X_2O_3$, CuO et du carbonate de Ba en quantité stoechiométriques sur les métaux, l'élément X étant l'un des éléments du groupe $Fe^{III}$, Al, Cr; les produits ont été mélangés et pastillés à la presse à la température ambiante. La calcination a été conduite à l'air à 1320°C pendant 20 minutes.

L'analyse par diffraction des rayons X montre que seuls les ferrites de structure cristallographique W se sont formés et ceux-ci possèdent les caractéristiques magnétiques suivantes:

| X | Fe | Al | Cr |
|---|---|---|---|
| Température de Curie (°C) | 485 | 435 | 430 |
| Aimantation à saturation en magnéton de Bohr par maille (4 K) | 61,2 | 52 | 69,4 |
| Aimantation spécifique à la température ambiante ($Am^2/kg$) | 74 | 63 | 60 |

*Exemple 2*

On a préparé les ferrites de formule: $BaO \cdot 2(1\text{-}x)ZnO \cdot 0,5\ x\ Cu_2O \cdot 0,5\ x\ X_2O_3 \cdot 8\ Fe_2O_3$ de façon analogue à celle utilisée pour l'exemple 1, la calcination étant cependant réalisée à l'air à 1320°C pendant 1 heure. Pour $x \leqslant 0,3$, on note la présence du spinelle $ZnFe_2O_4$.

Les résultats des mesures de température de Curie ($T_C$), de l'aimantation sous 2000 kA/m (σ) à la température ambiante (290 K), du champ d'anisotropie (Ha) et de la première constante du champ d'anisotropie ($K_1$) en fonction de la valeur de x sont reportés sur les figures 1 ($T_C$ pour x et X variables) et 2 (σ, Ha, $K_1$ pour X = Fe et x variable).

Les paramètres cristallographiques du ferrite pour lequel X = Fe sont les suivants:

| x | 0 | 0,25 | 0,50 | 0,75 | 1 |
|---|---|---|---|---|---|
| a(nm) | 0,5907 | 0,5905 | 0,5904 | 0,5903 | 0,5902 |
| c(nm) | 3,301 | 3,300 | 3,298 | 3,2970 | 3,2950 |

*Exemple 3*

On a préparé les ferrites de formule: $BaO \cdot 2(1\text{-}x)ZnO \cdot 0,5\ x\ Li_2O \cdot (8+0,5x)Fe_2O_3$ à partir

des oxydes, des carbonates de Ba et carbonates de Li dans les mêmes conditions que l'exemple 2.

Les évolutions de la température de Curie ($T_C$), de l'aimantation sous 2000 kA/m à 290 K ($\sigma$), du champ d'anisotropie (Ha) et de la première constante du champ d'anisotropie ($k_1$) en fonction de x variant de 0 à 1 sont reportées aux figures 3 et 4.

Les paramètres cristallographiques de ces ferrites sont les suivants:

| x | 0 | 0,25 | 0,50 | 0,75 | 1 |
|---|---|---|---|---|---|
| a(nm) | 0,5907 | 0,5904 | 0,5902 | 0,5900 | 0,5898 |
| c(nm) | 3,301 | 3,298 | 3,296 | 3,293 | 3,289 |

On constate ainsi que le volume de la maille diminue lorque l'on substitue le Li au Zn.

*Exemple 4*

On a préparé les ferrites de formule: BaO · 0,5(1-y)$Cu_2O$ · 0,5 y $Li_2O$ · 8,5 $Fe_2O_3$ de façon semblable à celle de l'exemple 3.

Les évolutions de la température de Curie ($T_C$), de l'aimantation sous 2000 kA/m ($\sigma$), du champ d'anisotropie (Ha) et de la première constante d'anisotropie ($K_1$) sont représentées en fonction de y aux figures 5 et 6.

Les paramètres cristallographiques de ces ferrites sont les suivants:

| y | 0 | 0,25 | 0,50 | 0,75 | 1 |
|---|---|---|---|---|---|
| a(nm) | 0,5902 | 0,5901 | 0,5900 | 0,5889 | 0,5898 |
| c(nm) | 3,295 | 3,292 | 3,2905 | 3,2900 | 3,2889 |

*Exemple 5*

On a préparé les ferrites de formule: (1-z) BaO · z SrO · 0,5 $Cu_2O$ · 8,5 $Fe_2O_3$, le Ba et le Sr étant introduits par leurs carbonates, dans les mêmes conditions que les exemples 2 à 4, avec z variant de 0 à 1.

On constate que les températures de Curie et les aimantations à saturation sont pratiquement constantes, alors que le champ d'anisotropie (Ha) et la première constante ($K_1$) augmentent fortement quand le Sr est progressivement substitué au Ba. Voir figure 7.

Les paramètres cristallographiques de ces ferrites sont les suivants:

| x | 0 | 0,25 | 0,50 | 0,75 | 1 |
|---|---|---|---|---|---|
| a(nm) | 0,5902 | 0,59005 | 0,5899 | 0,5898 | 0,5897 |
| c(nm) | 3,295 | 3,292 | 3,289 | 3,287 | 3,284 |

*Exemple 6*

On a préparé un aimant fritté à partir de la poudre de ferrite de formule SrO · ZnO · 0,25$Cu_2O$ · 8,25$Fe_2O_3$, additionnée de 1% de $CaSiO_3$ et de 0,3% d'$Al_2O_3$ (en poids), broyée, comprimée sous champ de 560 kA/m et sous une pression de 70 MPa et frittée à l'air à 1150°C pendant une heure.

Les caractéristiques magnétiques de l'aimant ainsi obtenu, de dimensions 20 × 20 × 15 mm, sont les suivantes:

— induction remanente: Br = 440 mT,
— champ coercitif intrinsèque: $H_{cJ}$ = 112 kA/m,
— énergie spécifique statique maximale: (BH) max. = 25,4 kJ/$m^3$,
— énergie spécifique dynamique maximale: (JH) max. = 37,4 kJ/$m^3$.

*Exemple 7*

On a préparé les composés:

— (I) 0,5 BaO · 0,5 SrO · 0,5 $Li_2O$ · 8,5 $Fe_2O_3$,
— (II a et b) 0,5 BaO · 0,5 SrO · ZnO · 0,25 $Cu_2O$ · 8,25 $Fe_2O_3$,
— (III) 0,5 BaO · 0,5 SrO · 0,5 $Cu_2O$ · 8,5 $Fe_2O_3$,

selon les méthodes décrites aux exemples 2, 3 et 5. Puis (I), (II a) et (III) ont été broyé finement en milieu aqueux vers une taille de l'ordre du micron, alors que (II b) n'a été broyé que grossièrement à sec vers une taille de 20 à 100 micromètres, identique à celle des cristaux de calcination. Puis ces quatres poudres ont été maintenues pendant une heure à diverses températures sous air et trempées rapidement sur une plaque froide. L'évolution de l'aimantation ($\sigma$) sous 2000 kA/m à la température ambiante est reportée à la figure 9.

Ces variations peuvent s'interpréter comme dues à la modification de la valence du Cu qui passe de $Cu^I$ à $Cu^{II}$ jusqu'à 1050°C environ, puis de $Cu^{II}$ à $Cu^I$ au-delà. On remarque en particulier que l'aimantation se conserve sur le produit (I) au lithium monovalent, mais aussi sur le produit (II b) où l'aspect massif, comme dans un aimant fritté, s'oppose aux échanges avec l'air. L'aimant fritté vers 1150°C retrouve donc toutes les qualités du produit initial que le broyage aurait pu perturber, et il les conserve lors de la descente en température après frittage.

Cette interprétation est confortée par les sens de variation des paramètres cristallins du composé (exemple 4): BaO · 0,5(1-x)$Cu_2O$ · 0,5 x $Li_2O$ · 8,5 $Fe_2O_3$, si on admet les rayons ioniques suivants: R (Li) = 0,074 nm, R ($Cu^{II}$) = 0,073 nm, R ($Cu^I$) = 0,096 nm, dans le cas de la coordinance 6; la substitution du cuivre au lithium s'accompagne par une augmentation du grand axe de c de la maille, ce qui est l'indice de l'introduction d'un ion plus gros.

*Exemple 8*

Les figures 10 et 11 représentent à titre d'exemple comparatif les spectres de rayons X obtenus avec une anti-cathode en fer ($\lambda$ = 0,193728) sur des poudres isotropes du composé: BaO · 2(1-x)ZnO · 0,5 x $Cu_2O$ · (8 + 0,5x) $Fe_2O_3$, respectivement pour x = 0,25 et x = 0,50, et préparées comme expliqué à l'exemple 2.

Les spectres analogues montrent clairement la présence de la raie principale du spinelle de Zn pour x $\leqslant$ 0,3 (raie hachurée) en plus des raies caractéristiques du ferrite W, ce qui justifie cette limite inférieure.

Cette limite est également valide pour les ferrites

de la série au lithium: $BaO \cdot 2(1\text{-}x)Zn \cdot 0,5\,x\,Li_2O \cdot (8+0,5x)\,Fe_2O_3$.

*Exemple 9*

On a préparé un aimant fritté à l'aide de 500 g de poudre de ferrite selon l'invention, de composition et de préparation identiques à celles de l'exemple 6, qui a été mélangé à 500 g de poudre de ferrite industriel, de formule $SrFe_{11}O_{17,5}$, puis additionnées de 10 g de $CaOSiO_2$ et de 3,98 g d'$Al_2(OH)_6$, broyée en milieu aqueux avec des billes d'acier pour une durée de 16 heures.

La boue contenant la poudre a été comprimée et filtrée sous champ magnétique, en une plaquette 100 × 100 × 15 mm$^3$; puis elle a été frittée à l'air à 1230°C pendant une heure. Les caractéristiques magnétiques obtenues sont les suivantes:
- introduction rémanente: Br = 460 mT,
- champ coercitif intrinsèque: $H_{cJ}$ = 119 kA/m,
- énergie spécifique statique maximale: (BH) max. = 30,8 kJ/m$^3$,
- énergie spécifique dynamique maximale: (JH) max. = 44,5 kJ/m$^3$.

**Revendications**

1. Ferrite de structure hexagonale, caractérisé en ce qu'il est représenté par la formule suivante: $(1+a)MO \cdot 2(1\text{-}x)Me^{II}O \cdot 0,5xMe_2^{I}O \cdot (8+0,5x)Me_2^{III}O_3$, formule dans laquelle:
- M représente un ou plusieurs métaux du groupe Sr, Ba, ces derniers étant éventuellement partiellement substitués par le Ca ou Pb,
- $Me^{II}$ représente un ou plusieurs métaux bivalents du groupe Zn, Mn, Ni, Co, Mg avec $0 < x \leqslant 1$, la fraction atomique en Zn restant cependant inférieure à 0,7,
- $Me^{I}$ représente le $Cu^{I}$ monovalent ou les métaux monovalents $Cu^{I}$ et Li,
- $Me^{III}$ représente un ou plusieurs métaux trivalents du groupe $Fe^{III}$, Al, Cr, ces derniers pouvant être partiellement substitués par le $Co^{III}$, $Mn^{III}$ ou $Ru^{III}$,
- et a étant compris entre −0,05 et +0,15.

2. Ferrite hexagonal type selon la revendication 1, caractérisé en ce que:
- M représente le Sr et/ou le Ba,
- $Me^{II}$ représente le Zn,
- $Me^{I}$ représente le Cu,
- $Me^{III}$ représente le $Fe^{III}$ avec $0,4 \leqslant x \leqslant 0,9$.

3. Ferrite hexagonal selon la revendication 2, caractérisé en ce que x est voisin de 0,5.

4. Matériau en ferrite hexagonal selon les revendications 1 à 3, caractérisé en ce que l'écart à la stoechiométrie a est compris entre −0,02 et +0,05.

5. Procédé d'élaboration d'un ferrite selon l'une des revendications 1 à 4, comportant le mélange initial des oxydes constitutifs (ou autres composés donnant des oxydes par pyrolyse), la calcination à l'air de celui-ci, un refroidissement et un broyage final caractérisé en ce que la calcination est effectuée entre 1200 et 1370°C pendant une durée comprise entre 15 minutes et 20 heures, et en ce que le refroidissement est rapide.

6. Procédé selon la revendication 5, caractérisé en ce que la calcination est effectuée entre 1300 et 1370°C pendant des durées comprises entre 40 minutes à 3 heures.

7. Procédé selon l'une des revendications 5 ou 6, pour l'obtention d'un produit, selon l'une des revendications 1 à 4, caractérisé en ce que la vitesse de montée à la température de calcination est supérieure à 15°C/mn.

8. Procédé selon l'une des revendications 5 à 7, pour l'obtention d'un produit selon l'une des revendications 1 à 4, caractérisé en ce que le refroidissement après calcination est effectué à une vitesse moyenne supérieure à 100°C/mn pendant les 5 premières minutes.

9. Procédé de fabrication d'aimants permanents à base des ferrites hexagonaux selon l'une des revendications 1 à 4, comprenant l'ajout au mélange de poudres initial, avant calcination et/ou avant frittage, d'un additif à base de silice, de silicates, d'oxydes alcalinoterreux, d'$Al_2O_3$, de $TiO_2$ et/ou de $Bi_2O_3$ ou des composés libérant ces oxydes par chauffage, en quantité totale inférieure ou égale à 5% en poids du ferrite formé.

10. Procédé selon la revendication 9, caractérisée en ce que l'on mélange les ferrites selon l'une des revendications 1 à 4 à des ferrites M, de formule générale $(Ba,Sr)O \cdot n\,Fe_2O_3$ avec $5 \leqslant n \leqslant 6$.

11. Procédé de fabrication d'aimants permanents frittés ou liés à base des ferrites hexagonaux selon l'une des revendications 1 à 4, comprenant le mélange desdits ferrites à des ferrites M, de formule générale $(Ba,Sr)O \cdot n\,Fe_2O_3$ avec $5 \leqslant n \leqslant 6$.

**Patentansprüche**

1. Ferrit mit hexagonaler Struktur, gekennzeichnet durch die folgende Formel:

$$(1+a)MO \cdot 2(1\text{-}x)MeO \cdot 0,5xMe_2^{I}O \cdot (8+0,5x)Me_2^{III}O_3,$$

wobei bedeuten:
- M mindestens ein Metall Sr oder Ba, die gegebenenfalls teilweise durch Ca oder Pb substituiert sind,
- $Me^{II}$ mindestens ein zweiwertiges Metall der Gruppe Zn, Mn, Ni, Co und Mg mit $0 < x \leqslant 1$, wobei die Zn-Atomfraktion jedoch unter 0,7 bleibt,
- $Me^{I}$ einwertiges $Cu^{I}$ oder einwertige Metalle $Cu^{I}$ und Li,
- $Me^{III}$ mindestens ein dreiwertiges Metall der Gruppe $Fe^{III}$, Al und Cr, die gegebenenfalls teilweise durch $Co^{III}$, $Mn^{III}$ oder $Ru^{III}$ substituiert sind, und
- a von −0,05 bis +0,15.

2. Hexagonaler Ferrit nach Anspruch 1, dadurch gekennzeichnet, dass
- M Sr und/oder Ba,
- $Me^{II}$ Zn,
- $Me^{I}$ Cu und
- $Me^{III}$ $Fe^{III}$ mit $0,4 \leqslant x \leqslant 0,9$ ist.

3. Hexagonaler Ferrit nach Anspruch 2, dadurch gekennzeichnet, dass x um 0,5 ist.

4. Werkstoff aus hexagonalem Ferrit nach einem der Ansprüche 1 bis 3, dadurch gekennzeichnet, dass die Abweichung a von der Stöchiometrie von -0,02 bis +0,05 beträgt.

5. Verfahren zur Herstellung eines Ferrits nach einem der Ansprüche 1 bis 4 durch Calcinieren an der Luft eines Anfangsgemisches von oxidischen Bestandteilen (oder anderen Verbindungen, die durch Pyrolyse zu Oxiden führen), Abkühlung und Endzerkleinerung, dadurch gekennzeichnet, dass die Calcinierung bei 1200 bis 1370°C während 15 Minuten bis 20 Stunden durchgeführt wird und die Abkühlung schnell erfolgt.

6. Verfahren nach Anspruch 5, dadurch gekennzeichnet, dass die Calcinierung bei 1300 bis 1370°C während 40 Minuten bis 3 Stunden durchgeführt wird.

7. Verfahren nach Anspruch 5 oder 6 zur Herstellung eines Produkts nach einem der Ansprüche 1 bis 4, dadurch gekennzeichnet, dass die Erhöhungsgeschwindigkeit der Calcinierungstemperatur über 15°C/min beträgt.

8. Verfahren nach einem der Ansprüche 5 bis 7 zur Herstellung eines Produkts nach einem der Ansprüche 1 bis 4, dadurch gekennzeichnet, dass die Abkühlung nach der Calcinierung bei einer mittleren Geschwindigkeit über 100°C/min während der ersten 5 Minuten erfolgt.

9. Verfahren zur Herstellung von Dauermagneten auf der Basis von hexagonalen Ferriten nach einem der Ansprüche 1 bis 4, gekennzeichnet durch Zugabe zum pulvrigen Anfangsgemisch, vor der Calcinierung und/oder vor dem Sintern, eines Zusatzes auf der Basis von Siliciumdioxid, Silikaten, Erdalkalimetalloxiden, $Al_2O_3$, $TiO_2$ und/oder $Bi_2O_3$ oder von Verbindungen, die durch Erhitzen diese Oxide freisetzen, in einer Gesamtmenge, die kleiner oder gleich 5 Gew.-% des gebildeten Ferrits entspricht.

10. Verfahren nach Anspruch 9, gekennzeichnet durch Vermischen der Ferrite nach einem der Ansprüche 1 bis 4 mit Ferriten M der allgemeinen Formel $(Ba,Sr)O \cdot n\ Fe_2O_3$ mit $5 \leqslant n \leqslant 6$.

11. Verfahren zur Herstellung von gesinterten oder gebundenen Dauermagneten auf der Basis von hexagonalen Ferriten nach einem der Ansprüche 1 bis 4, gekennzeichnet durch Vermischen der Ferrite mit Ferriten M der allgemeinen Formel $(Ba,Sr)O \cdot n\ Fe_2O_3$ mit $5 \leqslant n \leqslant 6$.

**Claims**

1. A ferrite of hexagonal structure characterised in that it is represented by the following formula:

$$(1+a)MO \cdot 2(1\text{-}x)Me^{II}O \cdot 0{,}5xMe_2^{I}O \cdot (8+0.5x)Me_2^{III}O_3$$

in which formula:

— M represents one or more metals from the group Sr and Ba, the latter optionally being partially substituted by Ca or Pb,

— $Me^{II}$ represents one or more divalent metals from the group Zn, Mn, Ni, Co and Mg with $0 < x \leqslant 1$, the atomic fraction of Zn however being lower than 0.7,

— $Me^{I}$ represents monovalent $Cu^{I}$ or the monovalent metals $Cu^{I}$ and Li,

— $Me^{III}$ represents one or more trivalent metals from the group $Fe^{III}$, Al and Cr, which latter may be partially substituted by $Co^{III}$, $Mn^{III}$ or $Ru^{III}$, and

— a being between -0.05 and +0.15.

2. Hexagonal type ferrite according to claim 1 characterised in that:

— M represents Sr and/or Ba,

— $Me^{II}$ represents Zn,

— $Me^{I}$ represents Cu, and

— $Me^{III}$ represents $Fe^{III}$ with $0.4 \leqslant x \leqslant 0.9$.

3. Hexagonal ferrite according to claim 2 characterised in that x is close to 0.5.

4. Material of hexagonal ferrite according to claim 1 to 3 characterised in that the difference at stoichiometry a is between -0.02 and +0.05.

5. A process for the preparation of a ferrite according to one of claims 1 to 4 comprising initial mixing of the constituent oxides (or other compounds giving oxides by pyrolysis), roasting same in the air, cooling and final crushing, characterised in that the roasting operation is carried out at beetween 1200 and 1370°C for a period of between 15 minutes and 20 hours, and that the cooling is rapid.

6. A process according to claim 5 characterised in that the roasting operation is carried out at between 1300 and 1370°C for periods of between 40 minutes and 3 hours.

7. A process according to one of claims 5 and 6 for producing a product according to one of claims 1 to 4 characterised in that the speed of rise to the roasting temperature is greater than 15°C/minute.

8. A process according to one of claims 5 to 7 for producing a product according to one of claims 1 to 4 characterised in that the cooling operation after roasting is carried out at a mean rate which is higher than 100°C/minute for the first 5 minutes.

9. Process of manufacture of permanent magnets based on hexagonal ferrites according to claims 1 to 4 comprising an addition to the initial mixture of powders, before roasting and/or before sintering, of an additive based on silica, silicates, alkaline earth oxides, $Al_2O_3$, $TiO_2$ and/or $Bi_2O_3$ or compound liberating such oxides by heating, in a total amount which is lower than or equal to 5% by weight of the ferrite formed.

10. Process according to the claim 9 characterised in that the ferrites according to one of the claims 1 to 4 are mixed with M ferrites, the general formula of which being $(Ba, Sr)O \cdot n\ Fe_2O_3$ with $5 \leqslant n \leqslant 6$.

11. Process of manufacturing of sintered or bonded permanent magnets from hexagonal ferrites according to one of the claims 1 to 4 comprising the mixing of such ferrites with M ferrites, of general formula $(Ba, Sr)\ O \cdot n\ Fe_2O_3$ with $5 \leqslant n \leqslant 6$.

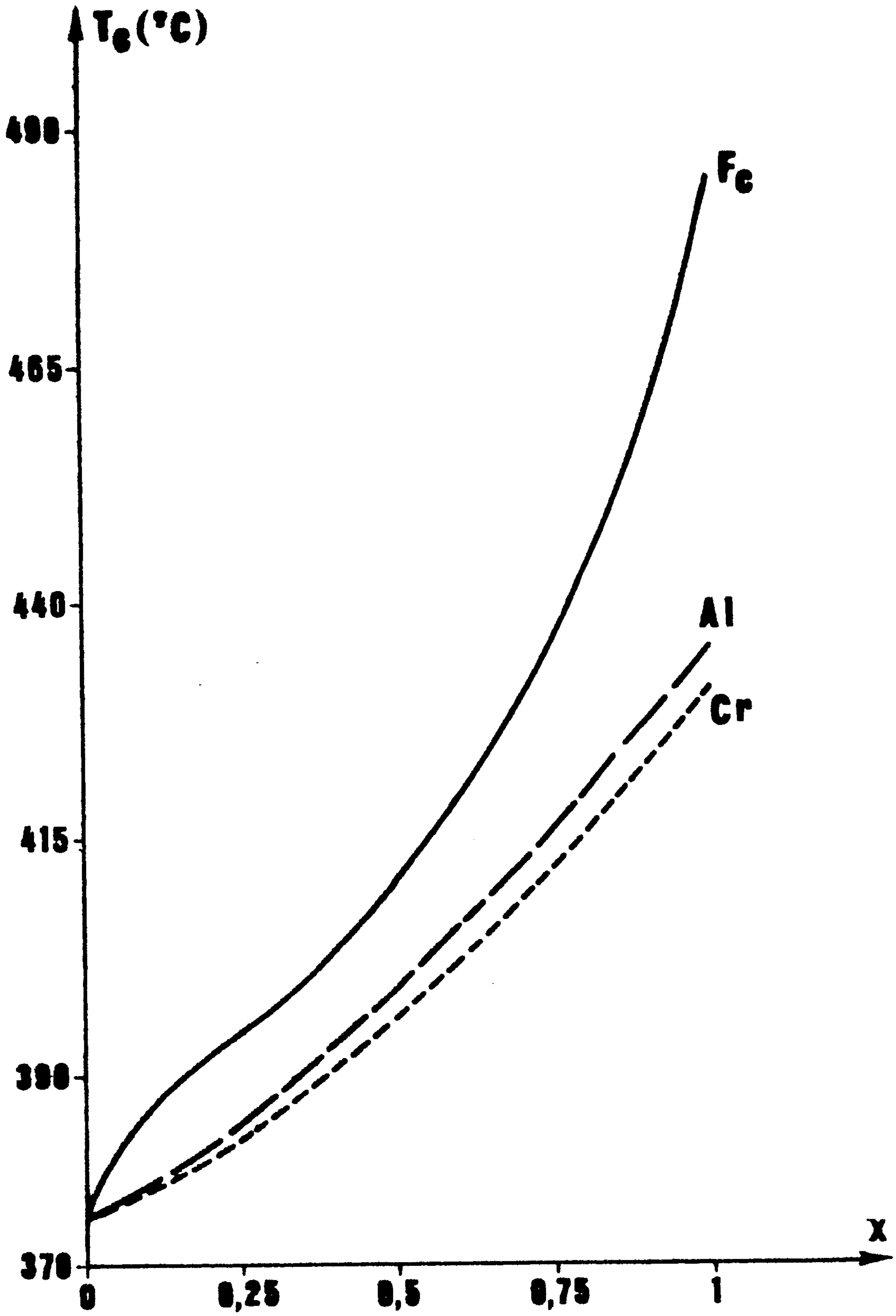


FIG. 1

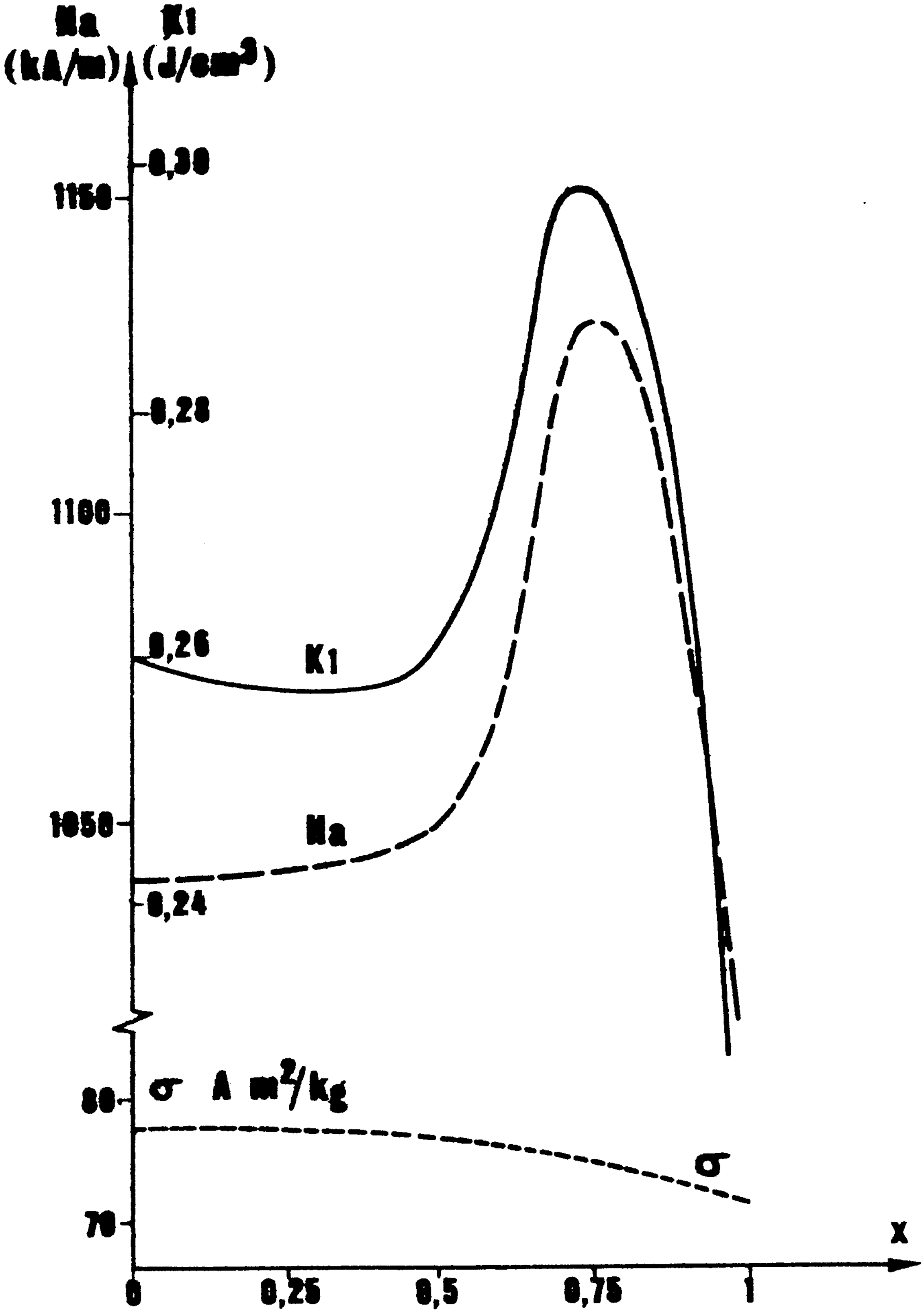
Ha
(kA/m)
K1
(J/cm³)
0,30
1150
0,28
1100
0,26
K1
1050
Ha
0,24
σ A m²/kg
80
σ
70
X
0
0,25
0,5
0,75
1

FIG. 2

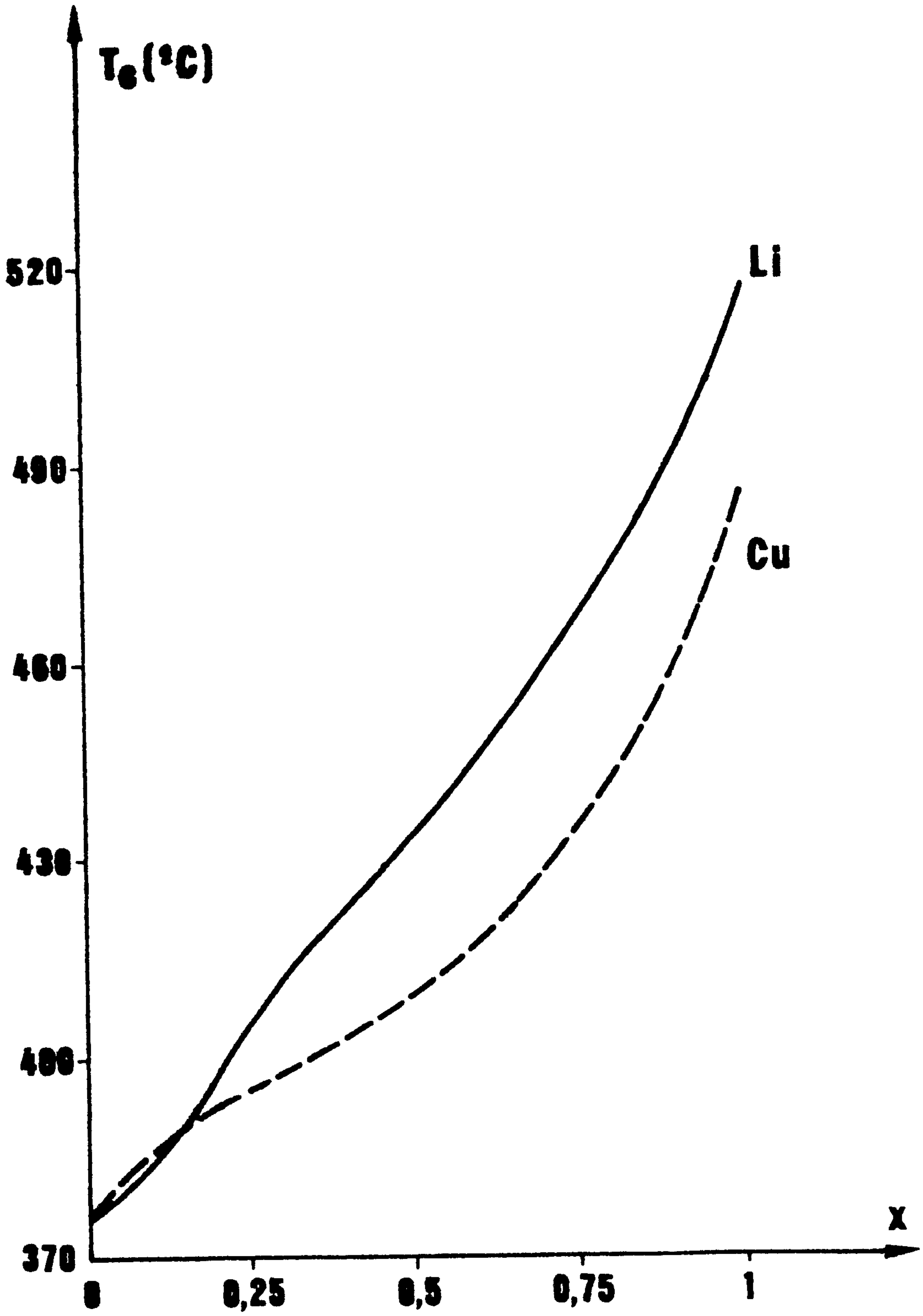


FIG. 3

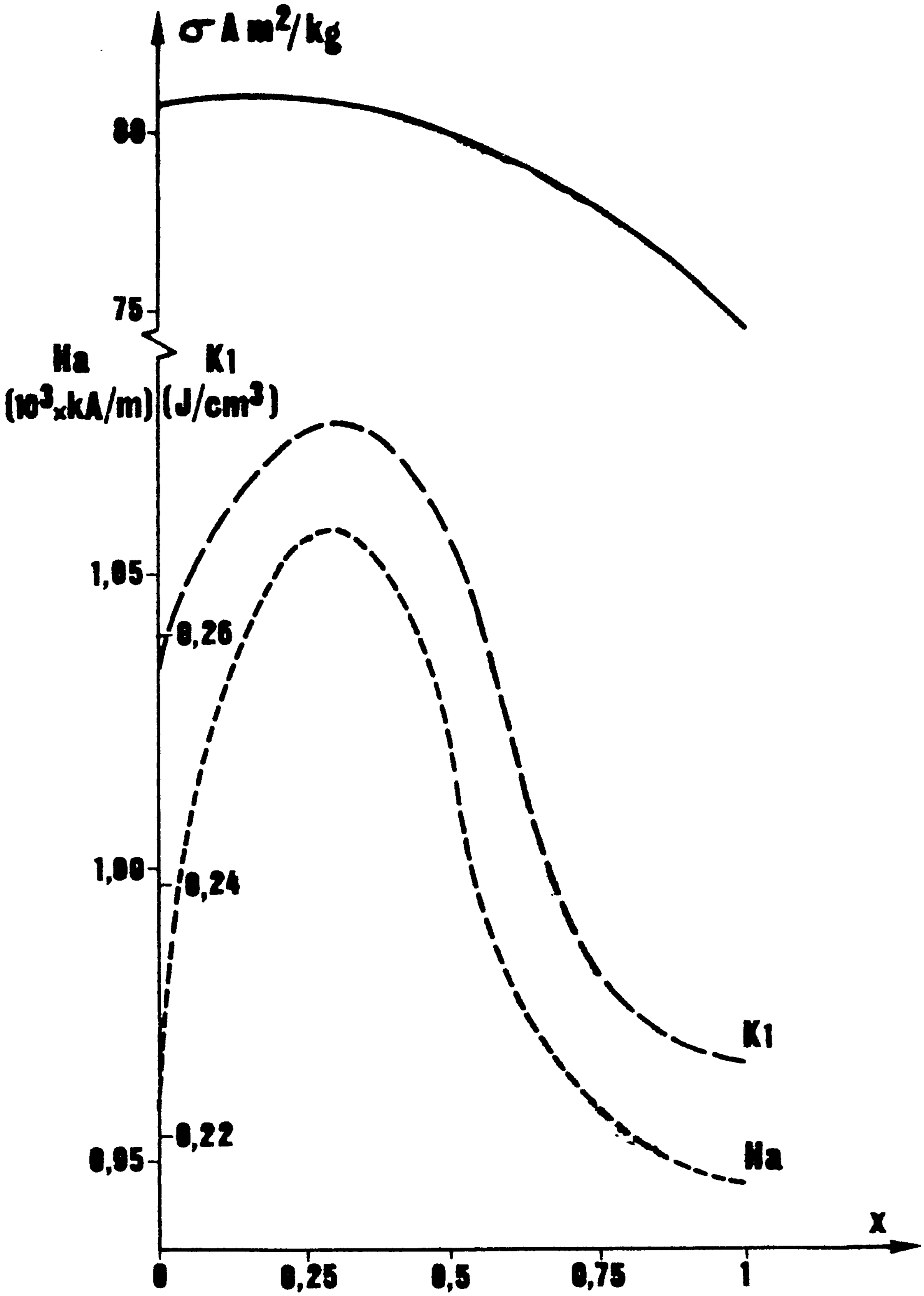
σ A m²/kg
80
75
Ha
(10³ x kA/m)
K1
(J/cm³)
1,05
0,26
1,00
0,24
0,22
0,95
K1
Ha
x
0
0,25
0,5
0,75
1

FIG. 4

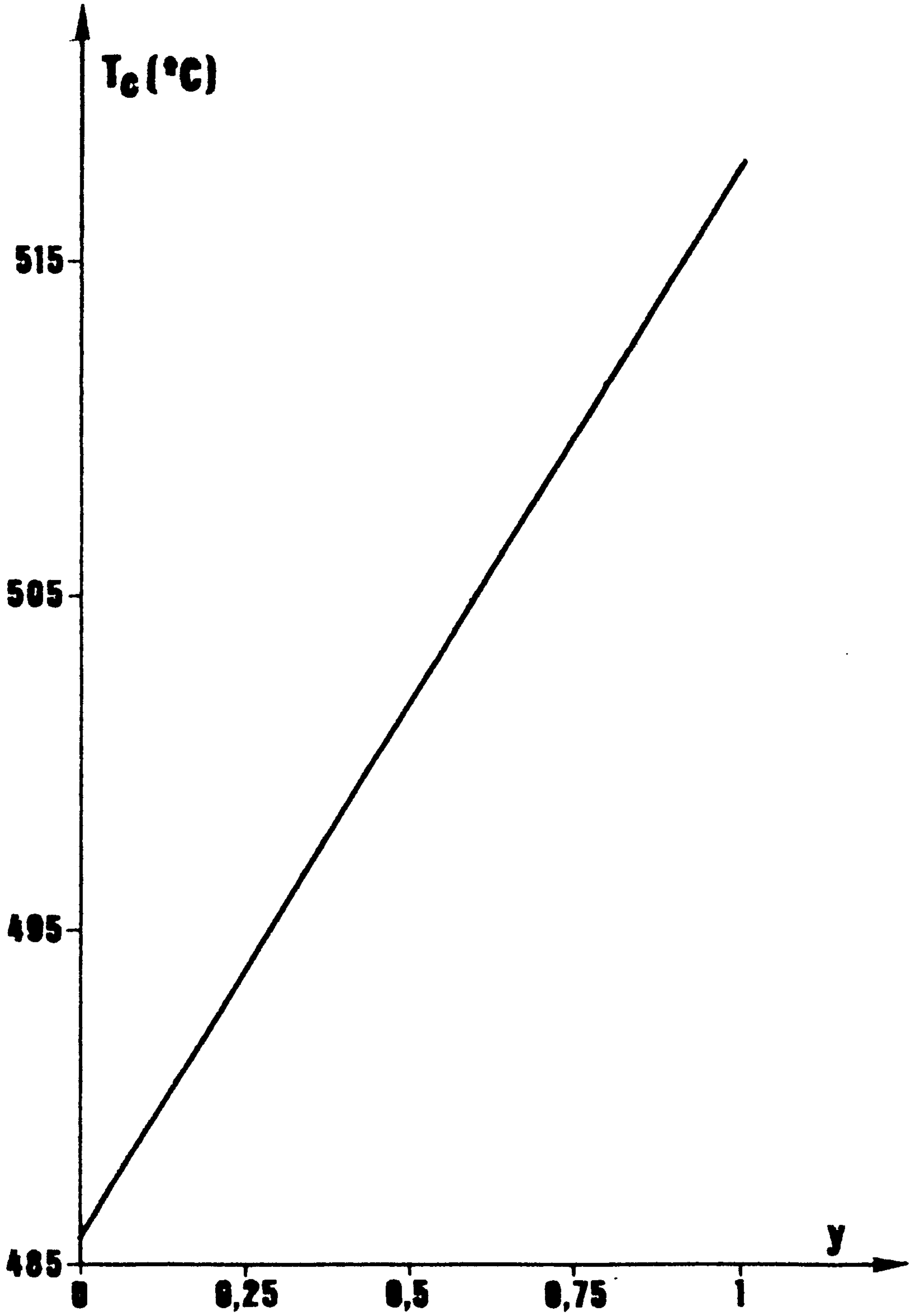


FIG. 5

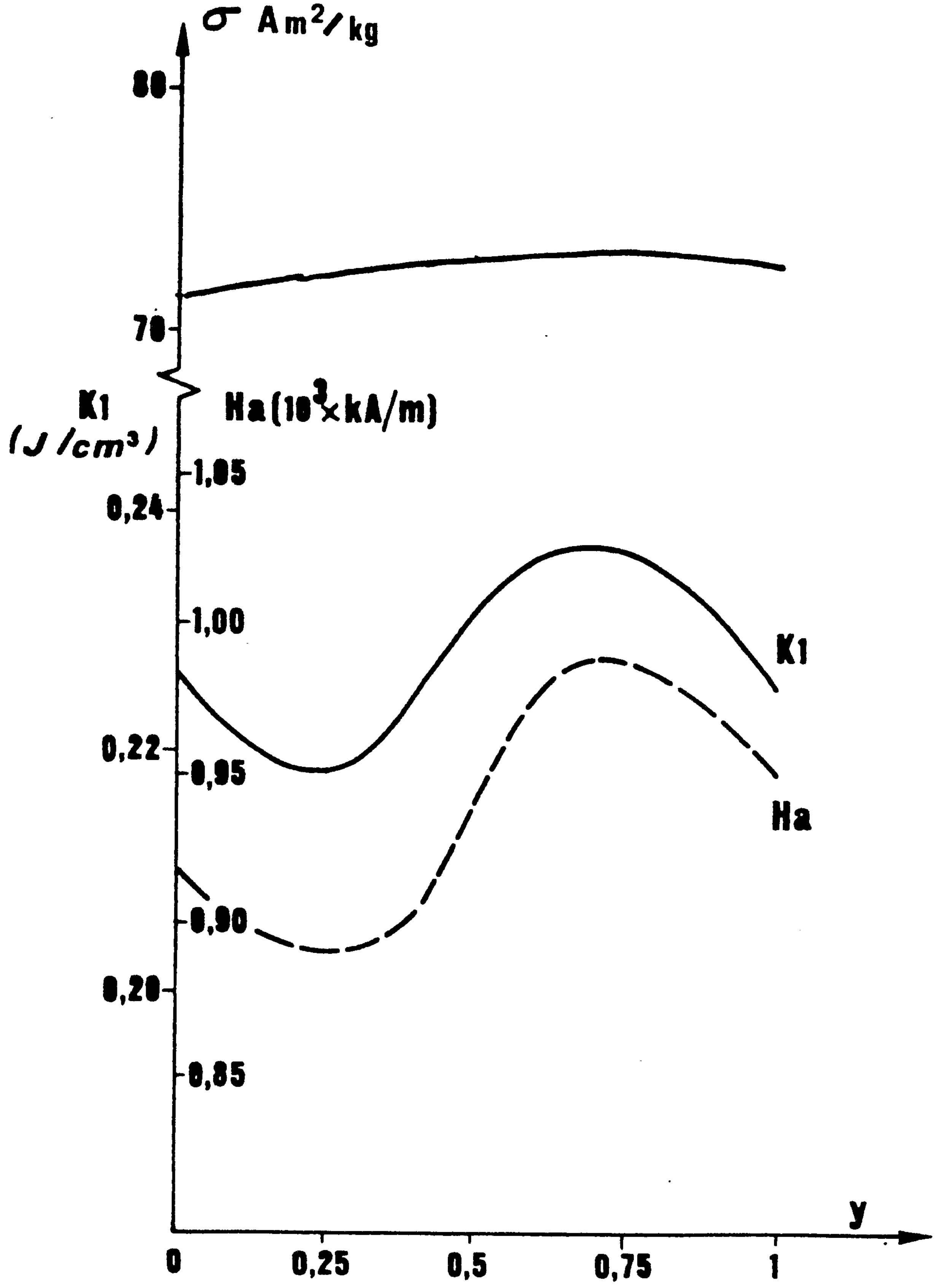
σ Am²/kg
80
70
K1
(J/cm³)
Ha(10³×kA/m)
1,05
0,24
1,00
K1
0,22
0,95
Ha
0,90
0,20
0,85
y
0
0,25
0,5
0,75
1

FIG. 6

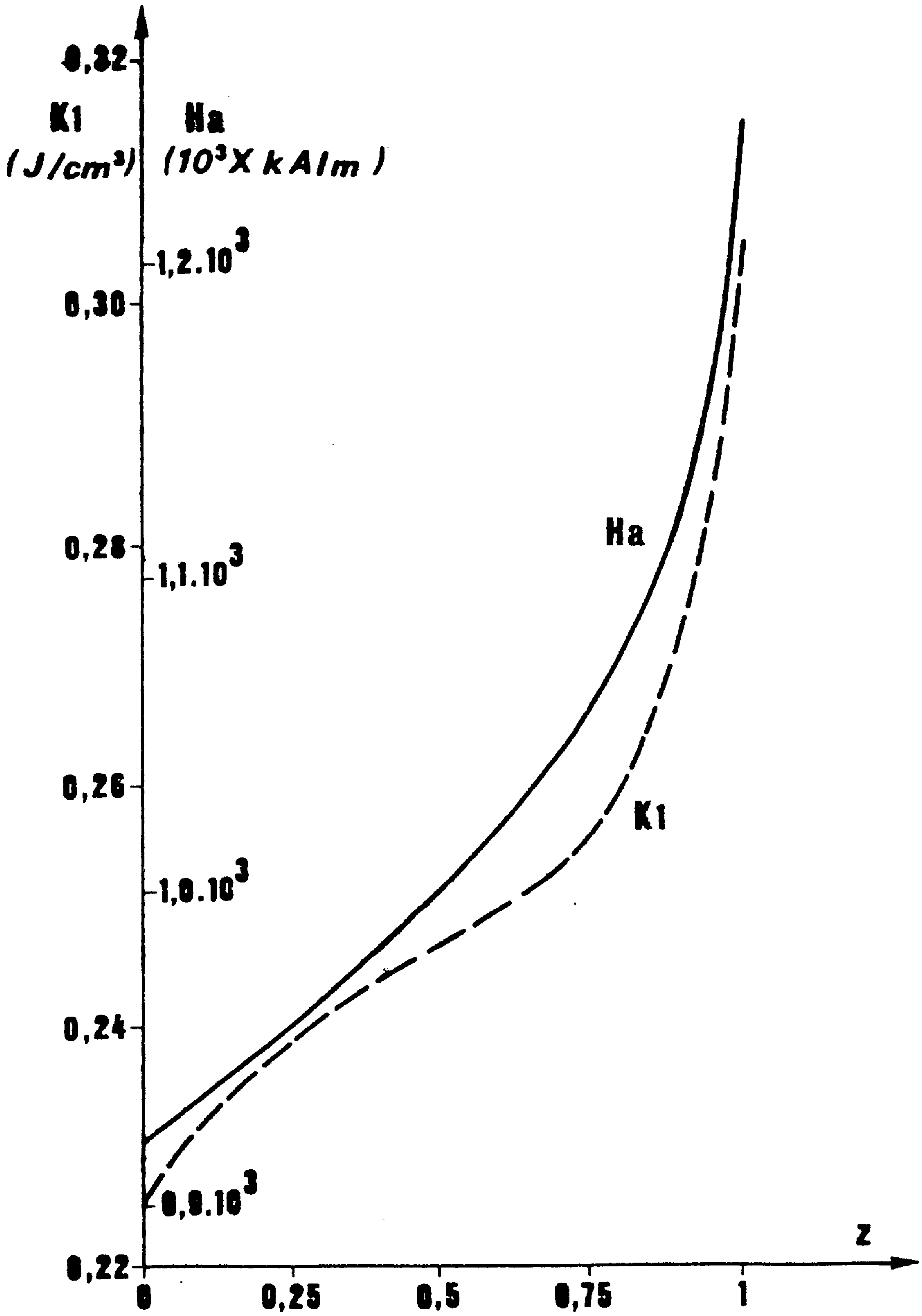
0,32
K1
(J/cm³)
Ha
(10³X kA/m)
1,2.10³
0,30
0,28
1,1.10³
0,26
1,0.10³
0,24
0,9.10³
0,22
Ha
K1
z
0
0,25
0,5
0,75
1

FIG. 7

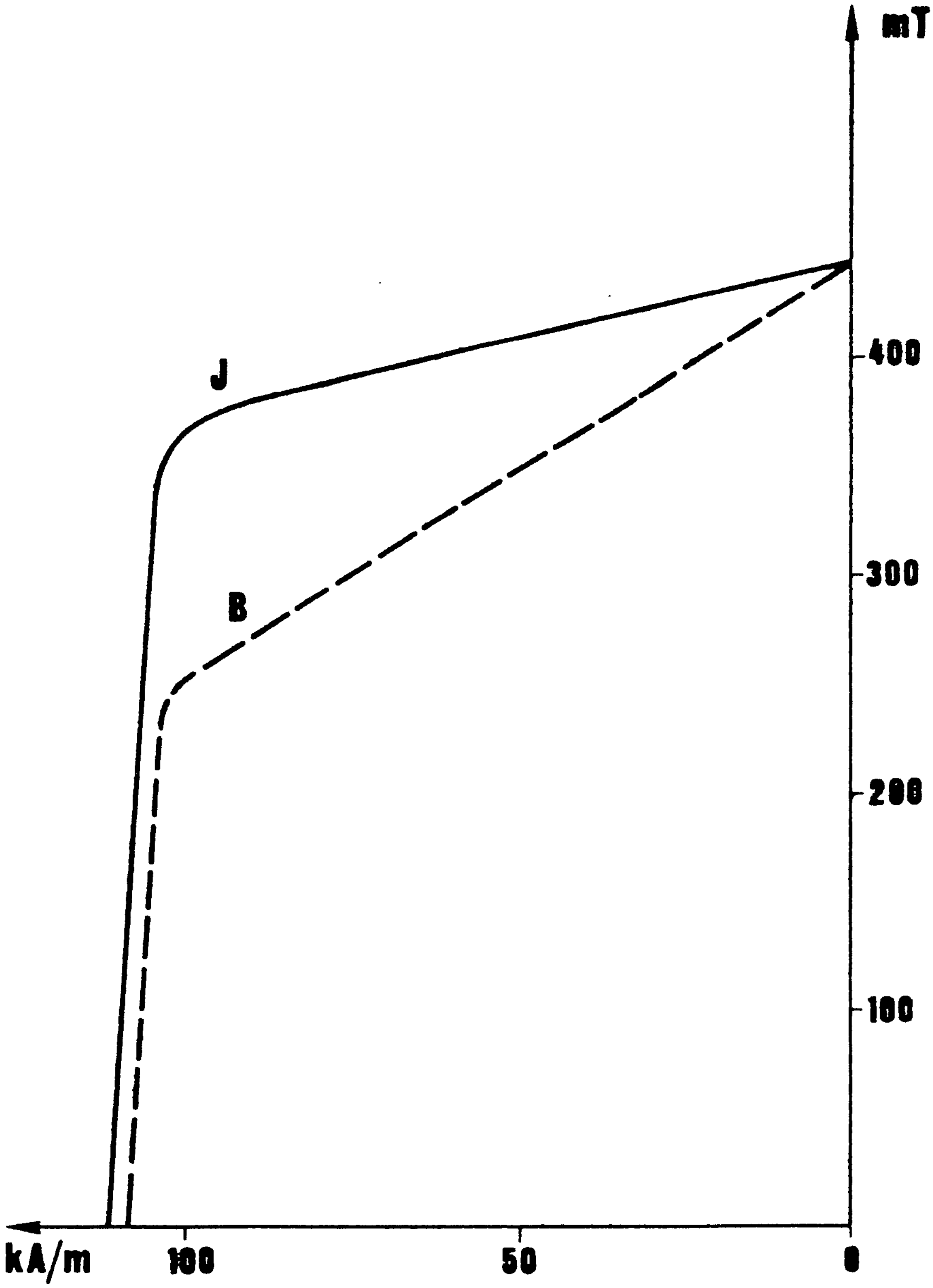


FIG. 8

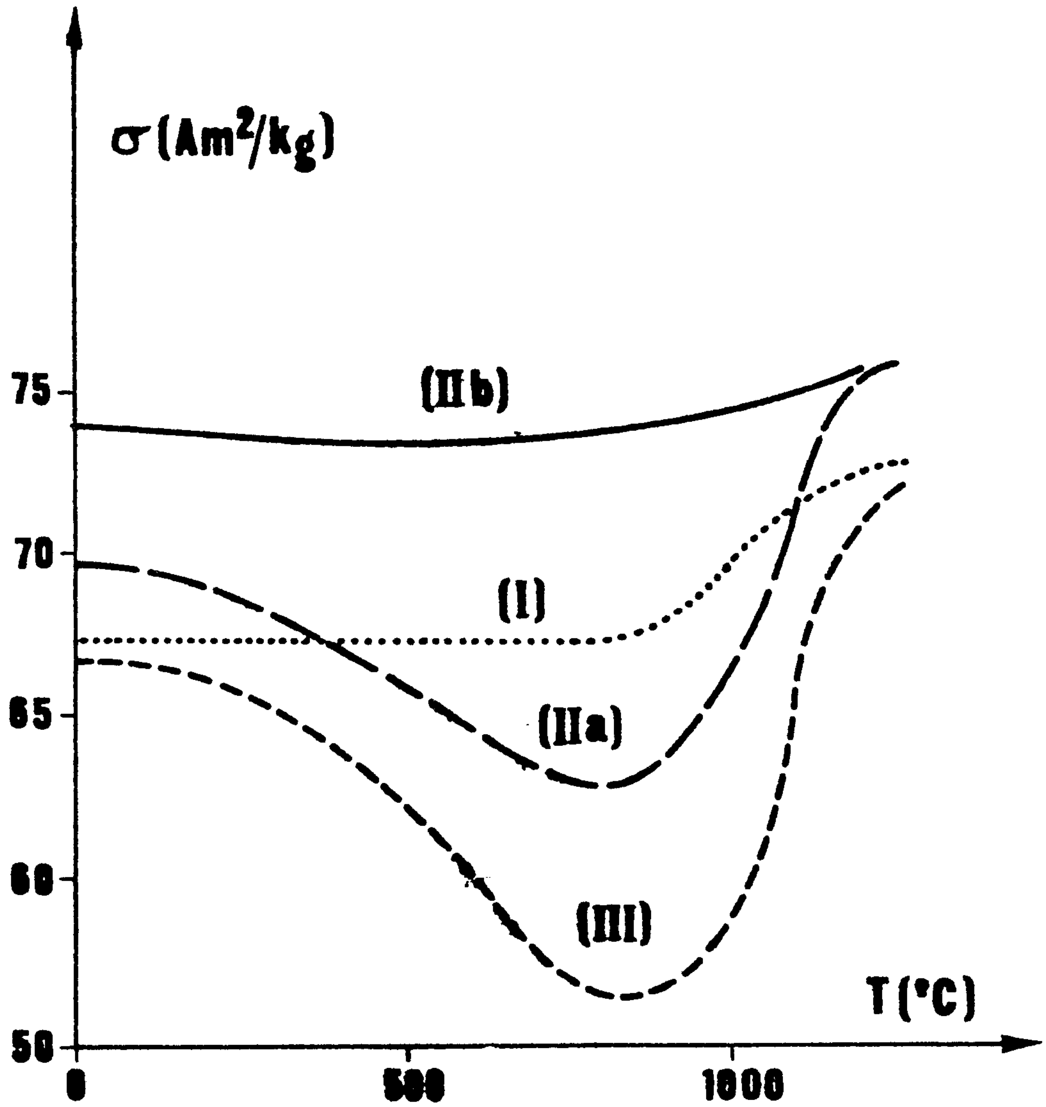


FIG. 9

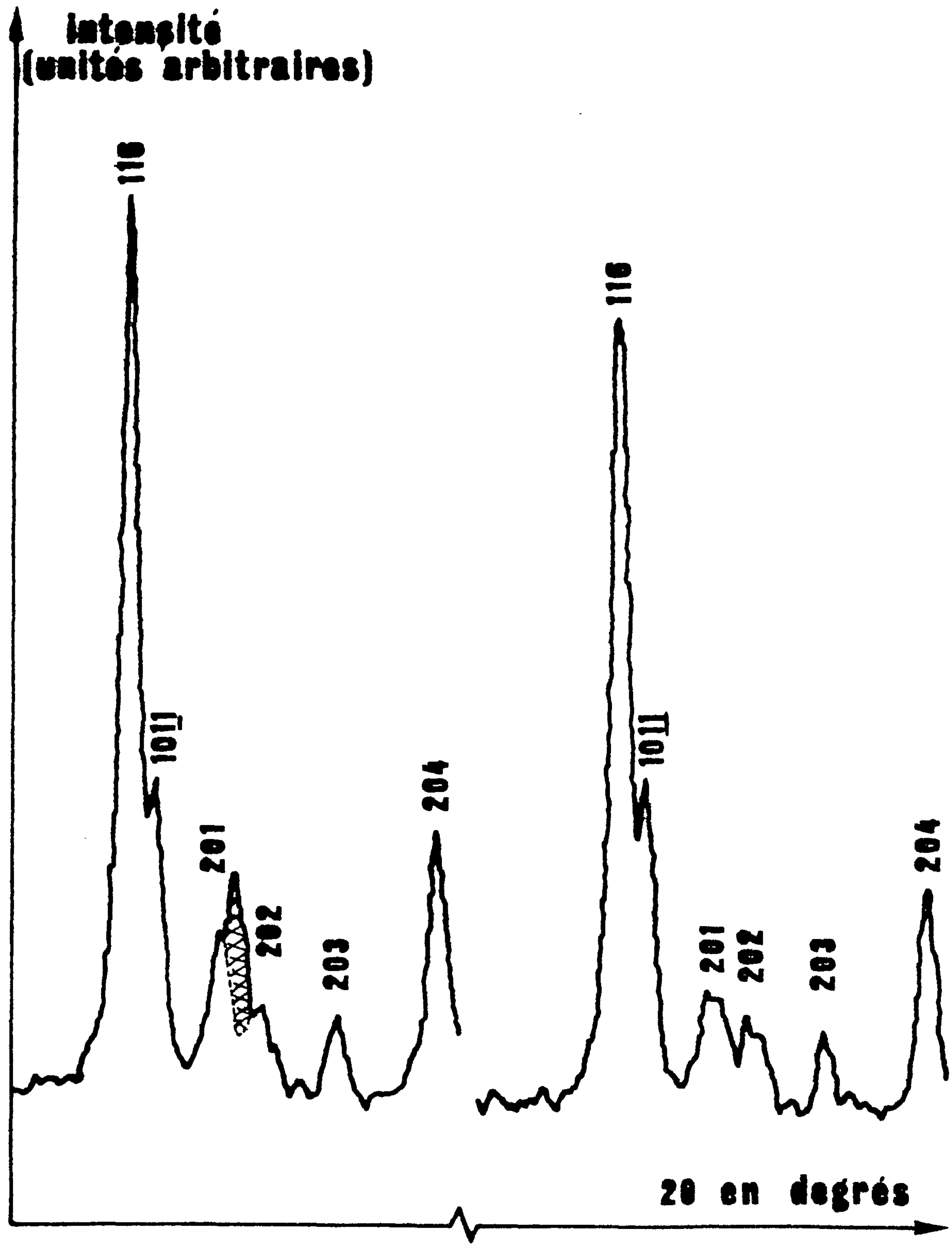
intensité
(unités arbitraires)
110
101]
201
202
203
204
116
101]
201
202
203
204
2θ en degrés

FIG. 10

FIG. 11